# EUROPÄISCHE PATENTSCHRIFT

(11) **EP 2 480 801 B1**
(45) Veröffentlichungstag und Bekanntmachung des Hinweises auf die Patenterteilung: **10.09.2014**
(21) Anmeldenummer: 10757197.8
(22) Anmeldetag: 22.09.2010
(51) Int. Cl.: F16G 3/02, F16G 3/08, F16G 3/09

(54) **STAHLSEILFÖRDERGURT MIT EINEM VERBINDUNGSSCHARNIER ZUM KOPPELN ZWEIER GURTENDEN**
STEEL CORD CONVEYOR BELT WITH A CONNECTING HINGE FOR COUPLING TWO BELT ENDS
BANDE CONVOYEUSE À CÂBLE D'ACIER COMPRENANT UNE CHARNIÈRE DE LIAISON POUR LE COUPLAGE DE DEUX EXTRÉMITÉS DE COURROIE

(30) Priorität: 23.09.2009 DE 102009044080
(43) Veröffentlichungstag der Anmeldung: 01.08.2012
(73) Patentinhaber: ContiTech Transportbandsysteme GmbH, 30165 Hannover (DE)
(72) Erfinder: MÖSCHEN, Michael, 37176 Nörten-Hardenberg (DE); HÜLS, Achim, 30890 Barsinghausen (DE)
(74) Vertreter: Finger, Karsten
(86) Internationale Anmeldenummer: PCT/EP2010/063945
(87) Internationale Veröffentlichungsnummer: WO 2011/036166

(56) Entgegenhaltungen:
- DE-A1- 1 750 481
- DE-U1- 29 519 856
- JP-A- 62 077 350
- US-A- 3 748 698

## Beschreibung

Die Erfindung betrifft einen Fördergurt oder Fördergurtsegment aus elastomerem Werkstoff mit einer Festigkeitsträgerlage aus in Längsrichtung des Fördergurtes verlaufenden, parallel zueinander angeordneten Stahlseilen, wobei jedes Gurt- bzw. Segmentende eine Ausbildung zum schamierartigen Zusammenkoppeln mit einem anderen Gurt- bzw. Segmentende aufweist.

Es ist bekannt, aus elastomerem Werkstoff bestehende Fördergurte dadurch endlos zu schließen, dass die beiden Enden des Fördergurtes nach einem gezielten Abarbeiten der Gummideckschichten in den Endbereichen zusammengelegt und durch Vulkanisation unlösbar miteinander verbunden werden.

Das ist besonders bei Stahlseilfördergurten übliche Praxis, die auch nach einem Schaden und folgender Reparatur eines Stahlseilfördergurtes zur Anwendung kommt. Nach Überlappen der Gurtenden und Ineinanderlegen der freigelegten Stahlseilendabschnitte und nach Auflegen von Gummideckplatten wird eine Stahlseilgurtverbindung durch Vulkanisieren hergestellt. Der Geräte- und Zeitaufwand zum Herstellen einer derartigen Stahlseilgurtverbindung ist hoch. Der Produktionsprozess bzw. Förderprozess ist in dieser Zeit unterbrochen.

Um wenigstens einen Notbetrieb der Förderanlage zu erreichen, ist es aus EP 0 483 630 B1 bekannt, einige Stahlseilenden an beiden Gurtbruchenden freizulegen und mit einem separaten Verbindungsstück aus festem Werkstoff kraftschlüssig zu koppeln. Diese Verbindung ist aber lediglich kurzfristig für eine dringend benötigte Förderanlage im Sinne einer Notverbindung mit verminderter Belastbarkeit zu sehen. Nach einem möglichen Stilllegen der Förderanlage wird der Fördergurt wieder herkömmlich durch Vulkanisation seiner beiden Enden endlos geschlossen.

Für bestimmte Fördergurte sind auch Endlosverbindungen bzw. Endverbindungen durch mechanische Verbindungsvorrichtungen bekannt zum Beispiel DE 29519856. Dabei weist das jeweilige Gurtende ein mechanisches Verbindungsteil auf, das mit dem Verbindungsteil des jeweils anderen Gurtendes lösbar gekoppelt wird. Eine derartige lösbare Verbindungsform ist die Scharnierform. Dabei weisen die Gurtenden jeweils ein Teilscharnier auf, das mit dem Teilscharnier des jeweils anderen Gurtendes komplementär zusammengefügt und durch einen durch die zinnenartigen, ineinandergreifenden Scharnierösen geführten Kopplungsstab miteinander zugfest verbunden wird.

Diese lösbaren Verbindungen werden besonders für Fördergurte, die nur mit großem Aufwand montiert werden können oder die im Betrieb häufiger ausgewechselt, gekürzt oder verlängert werden müssen, angewandt. Derartige Scharnierverbindungen werden überwiegend bei gewebeverstärkten Fördergurten eingesetzt. Bei Stahlseilfördergurten haben sich die scharnierartigen Verbindungen nicht durchsetzen können, da die zugfeste Anbindung der Scharnierteile an die Gurtenden ein nicht gelöstes Problem darstellt.

Aus der GB 902 300 ist es bekannt, Fördergurtsegmente mit einer Cordeinlage aus Stahldrähten zu versehen. Die Drahtcordeinlage besteht aus einem helixförmig über die Gurtbreite verlegten schmalen Kautschukband, das einige Drähte in seiner zum Band ausgewalzten, vulkanisierbaren Gummimischung in einer horizontalen Ebene parallel nebeneinander liegend aufnimmt. An jedem Segmentende wird das Kautschukband unter jeweils zweimaligem Seitenversatz zu mehreren Schlaufen geformt. Bei Zurücklaufen aus jeder Schlaufe erfährt das Kautschukband wieder einen Seitenversatz und verläuft seitlich neben dem Bandzulauf in derselben horizontalen Ebene. Das Kautschukband bildet auf diese Weise an beiden Enden des Fördergurtsegmentes mehrere in einer Ebene liegende, voneinander beabstandete gummierte Schlaufen. Die Stahldrähte werden aus ihrer im Gurtsegment verlaufenden Richtung zum Schlaufenbereich und aus ihm heraus ausgelenkt. Die gebildeten Schlaufen liegen zinnenförmig im Abstand zueinander. In die so gebildeten Zwischenräume können komplementäre, gummierte Schlaufen des Gurtendes eines anderen Fördergurtsegmentes eingreifen. Mittels eines Kupplungsstabes werden beide Schlaufenreihen scharnierartig miteinander gekuppelt.

Die zur Schlaufe geformten Stahldrähte müssen sehr scharf umgelenkt werden. Dies führt zu einer deutlichen Herabsetzung der zulässigen Zugbelastung bzw. zu einer Bruchgefahr der Stahldrähte. Es ist ersichtlich, dass nur sehr dünne Stahldrähte diese Verformung überhaupt mitmachen können. Für große Kräfte übertragende Stahlseilfördergurte mit relativ starren Stahlseilen ist diese Konstruktion nicht geeignet. Außerdem wird der gesamte Gurtquerschnitt in seiner Dicke in dem Bereich des Gurtendes zwangsläufig durch die Konstruktion vergrößert, was sich bei einem Umlauf des gesamten Fördergurtes in der Förderanlage nachteilig darstellt.

Der Erfindung liegt die Aufgabe zugrunde, eine Scharnierverbindung auch für Stahlseilfördergurte bzw. Stahlseiliördergurtsegmente mit mittleren und größeren Seildurchmessern zu schaffen, die zugfest und mit geringem Aufwand herstellbar ist.

Die Aufgabe wird erfindungsgemäß durch, die Ansprüche 1 und 3 gelöst.

Die beiden Spannplatten jeder Spanneinheit sind über geeignete Befestigungsmittel miteinander verbunden bzw. gegeneinander verspannt. Die Befestigungsmittel durchdringen den reduzierten Gurtkörper in den Endbereichen. Als Befestigungsmittel eignen sich Schrauben oder Niete.

In vorteilhafter Ausgestaltung der Erfindung ist dass der Scharnierriegel an seinem freien Ende zinnenartige Lochansätze aufweist, dass an dem Scharnierriegel den Lochansätzen gegenüberliegend unter Bildung einer Anschlagstufe eine integrierte Spannplatte angeformt ist, wobei die Bodenfläche der integrierten Spannplatte und die untere Außenoberfläche des Scharnierriegels in einer Ebene verlaufen, dass die integrierte Spannplatte in der einen Gummideckplatte des Fördergurtes durch Reduzierung der Dicke der Gummideckplatte eingelassen ist, dass auf der anderen Gurtseite eine korrespondierende, separate Spannplatte in die dortige Gummideckplatte eingelassen ist, die stirnseitig gegen die Anschlagstufe des Scharnierriegels anliegt, dass die beiden Spannplatten das dickenreduzierte Gurtende zwischen sich pressend aufnehmend miteinander verbunden sind.

Die zweiteilige Ausbildung der durch die beiden Spannplatten gebildeten Spanneinheit jeder Scharnierseite erlaubt einen Ausgleich von Dickentoleranzen des jeweiligen dickenreduzierten Gurtendes.

Die Spannplatten werden vorzugsweise aus Metall gefertigt und mit Durchgangsbohrungen versehen, um mittels Schrauben, Niete oder anderer Befestigungselemente mit dem jeweiligen, deckschichtenreduzierten Gurtende des Stahlseilfördergurtes verbunden zu werden.

In vorteilhafter Ausgestaltung der Erfindung ist die Spannfläche mindestens einer Spannplatte mit Querrippen versehen. Dadurch wird eine Verstärkung der kraftschlüssigen Einklemmung der Gurtenden durch einen Formschlussanteil erreicht.

In weiterer vorteilhafter Ausgestaltung der Erfindung sind die sich gegenüberliegenden Spannplatten beide mit zinnenartigen Vorsprüngen versehen, die jeweils zusammen ein Teilscharnier bilden. Durch diese Ausgestaltung können die Kräfte, die bei der asymmetrischen Gestaltung der Spannplatte zu einer Deformation der Spannplatten führen können, kompensiert werden.

In weiterer vorteilhafter Ausgestaltung der Erfindung sind die Innenseiten der Spannplatten mit Längsnuten versehen, die in derselben Abstandsteilung wie die Stahlseile zueinander angeordnet sind. Durch diese Ausbildung wird die Auszugskraft der Gurtenden erhöht.

In weiterer vorteilhafter Ausgestaltung der Erfindung ist neben jeder Längsnut eine weitere Längsnut in geringem Abstand eng nebenliegend angeordnet. Durch die Einbringung zweier paralleler Längsnuten in geringem Abstand können bei der Montage fertigungstechnisch bedingt variierende Seilabstände oder ein paralleler Versatz ausgeglichen werden

Durch die Erfindung kann die in Gurtlängsrichtung angeordnete Stahlseilkordlage ohne Auslenkung verlaufen. Eine aufwendige Vulkanisation der Gurtenden miteinander ist nicht mehr notwendig. Als weiterer Vorteil ist anzusehen, dass die scharnierartige Verbindungsvorrichtung wiederverwendbar ist.

Durch die Erfindung wird eine Verbindung der Gurtenden eines Fördergurtes oder Fördergurtsegmente geschaffen, durch die eine Übertragung der für den jeweiligen Stahlseilgurt zulässigen Zugkräfte gewährleistet ist und die mittels einfacher Werkzeuge geschlossen und gelöst werden kann. Die Konstruktionsteile des jeweiligen Teilscharnieres liegen im Wesentlichen innerhalb des Gurtquerschnittes.

Anhand der Zeichnung werden nachstehend zwei Ausführungsbeispiele der Erfindung näher erläutert. Es zeigt
- Fig. 1: eine geschlossene Scharnierverbindung zweier Enden eines StahlseilFördergurtes;
- Fig. 2: die in Fig. 1 dargestellte Scharnierverbindung im gelösten Zustand;
- Fig. 3: die Scharnierverbindung in einer gläsernen Darstellung zur Verdeutlichung der eingebetteten, parallelen Stahlseile;
- Fig. 4: eine geschlossene, modifizierte Scharnierverbindung zweier Enden eines Stahlseilfördergurtes;
- Fig. 5: die in Fig. 4 dargestellte Scharnierverbindung im gelösten Zustand;
- Fig. 6: eine Seitenansicht der Scharnierverbindung gemäß Fig. 4 in einer gläsernen Darstellung zur Verdeutlichung der Einspannung der parallelen Stahlseile.

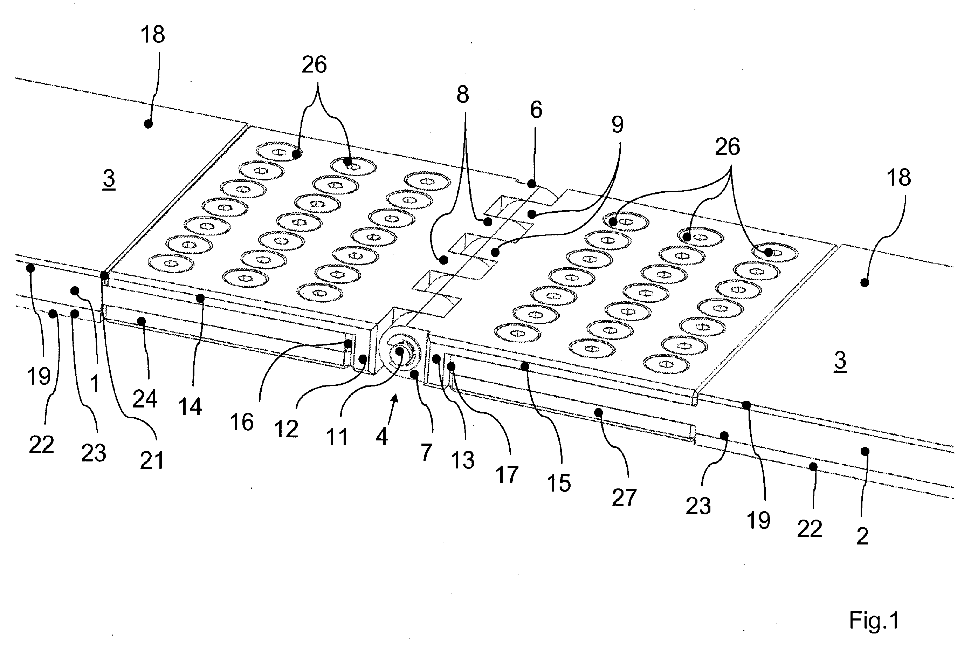

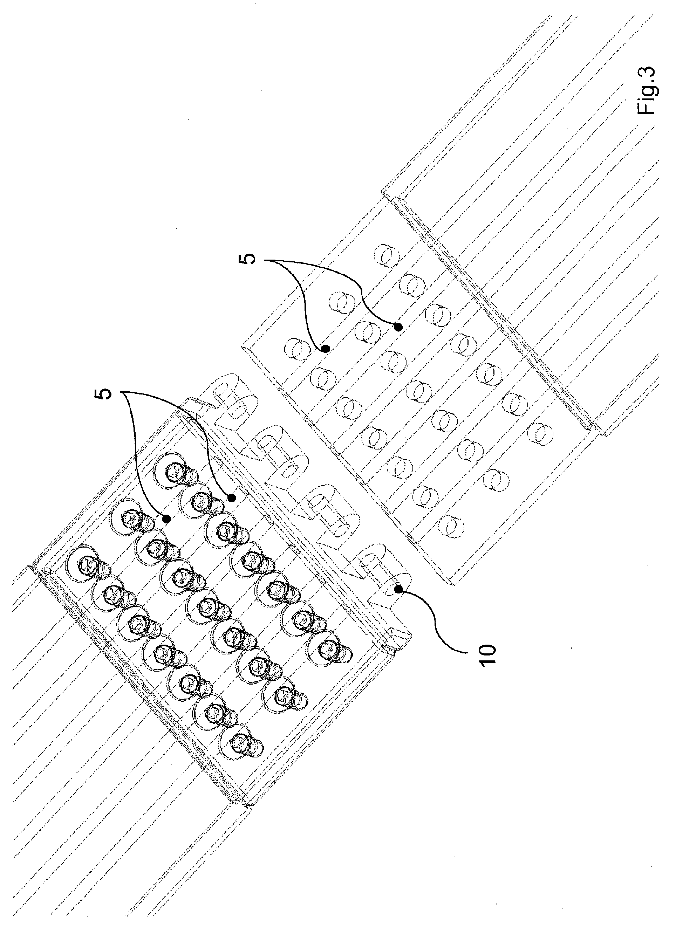

Zwei Enden 1 und 2 eines Stahlseilfördergurtes 3 sind über ein Scharnier 4 miteinander zugfest verbunden (Fig. 1). Der Stahlseilfördergurt 3 ist in an sich bekannter Weise aus elastomerem Werkstoff aufgebaut und weist eine eingebettete Festigkeitsträgerlage aus Stahlkorden bzw. parallel angeordneten Stahlseilen 5 auf. Zur Darstellung dieser Einbettung sind in Fig. 3 die Gurtenden 1, 2 in gläsernem Schnitt dargestellt.

Das Scharnier 4 besteht aus zwei Teilscharnieren 6 und 7, deren zinnenartige Vorsprünge 8 bzw. 9 derart ineinander greifen, dass die in den Vorsprüngen 8 bzw. 9 angeordneten Querbohrungen 10 miteinander fluchten, so dass ein Kupplungsstab 11 durch die Querbohrungen 10 zum Schließen des Scharniers 4 einführbar ist. Jedes Teilscharnier 6 bzw. 7 besteht aus einem die zinnenartigen Vorsprünge 8, 9 tragenden Scharnierriegel 12 bzw. 13, der schamierabgewandt jeweils eine integrierte Spannplatte 14 bzw. 15 aufweist, die unter Bildung eines vertikalen Absatzes, der eine Anschlagstufe 16 bzw. 17 bildet, am jeweiligen Scharnierriegel 12 bzw. 13 angeformt sind.

Im Nachfolgenden wird nur eine Scharnierseite beschrieben. Diese Ausführungen gelten sinngemäß auch für die andere Scharnierseite. Die Teilscharniere 6 und 7 sind baugleich ausgeführt.

Die integrierte Spannplatte 14 liegt flächig auf der Oberseite 18 des Gurtendes 1 auf (Fig. 1), wobei die Deckgummischicht 19 der Oberseite 18 in diesem Bereich abgetragen ist. Die Höhe der Abtragung 21 entspricht der Dicke der integrierten Spannplatte 14. Die integrierte Spannplatte 14 ist somit nahezu fluchtend in die Gurtoberseite 18 eingesetzt. Die entgegengesetzte Gurtunterseite 22 ist ebenfalls im Bereich des Gurtendes 1 durch Teilentfernen einer bestimmten Dicke der unteren Gummideckschicht 23 abgetragen und nimmt in diesem Bereich eine separate Spannplatte 24 auf, die in ihren Abmessungen der integrierten Spannplatte 14 der Oberseite entspricht.

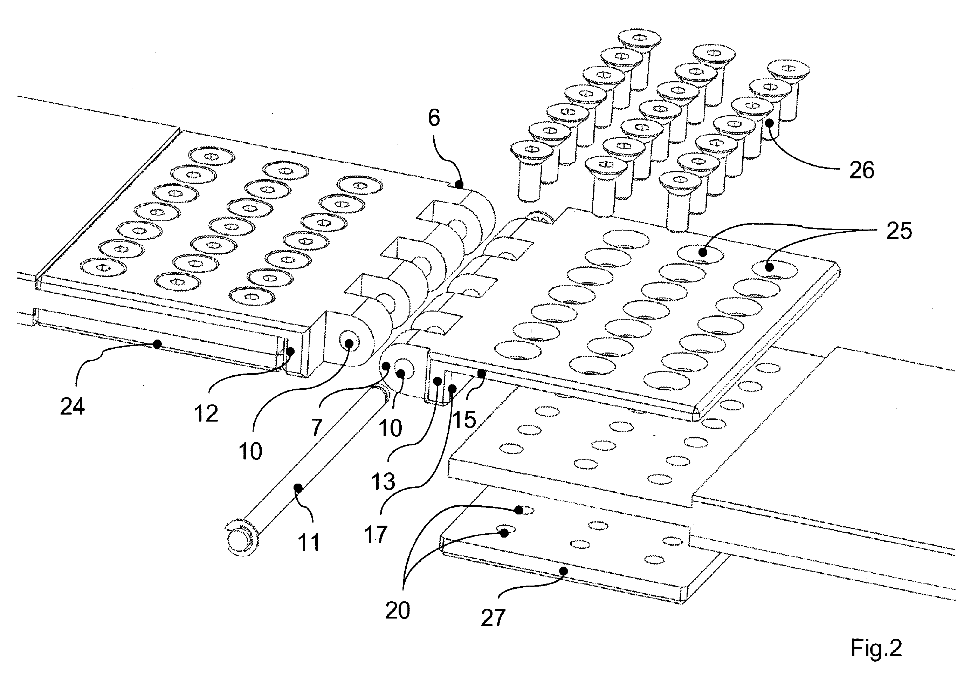

Die integrierten Spannplatten 14 und 15 weisen jeweils drei Reihen von Durchgangsbohrungen 25 quer zur Gurtbreite auf (Fig. 2). Die separaten Spannplatten 24 und 27 weisen jeweils drei Reihen von Gewindebohrungen 20 quer zur Gurtbreite auf, die deckungsgenau unter den Durchgangsbohrungen 25 liegen.

Die beiden Spannplatten 14 und 24 einer Scharnierseite bilden eine Spanneinheit und sind unter Einschluss des in der Dicke reduzierten Fördergurtendes 1 fest miteinander durch Schraubverbindungen 26 zusammengefügt und pressen dabei jeweils den zwischen sich liegenden Gurtbereich ein. Das Fördergurtende 1 wird zwischen den Spannplatten 14 und 24 eingespannt. Das Fördergurtende 2 wird zwischen den Spannplatten 15 und 27 eingespannt. Die Zugkräfte werden durch Schubspannungen im Gummi von den Stahlseilen 5 über die Spannplatten 14 und 24 bzw. 15 und 27 auf das Scharnier 4 übertragen.

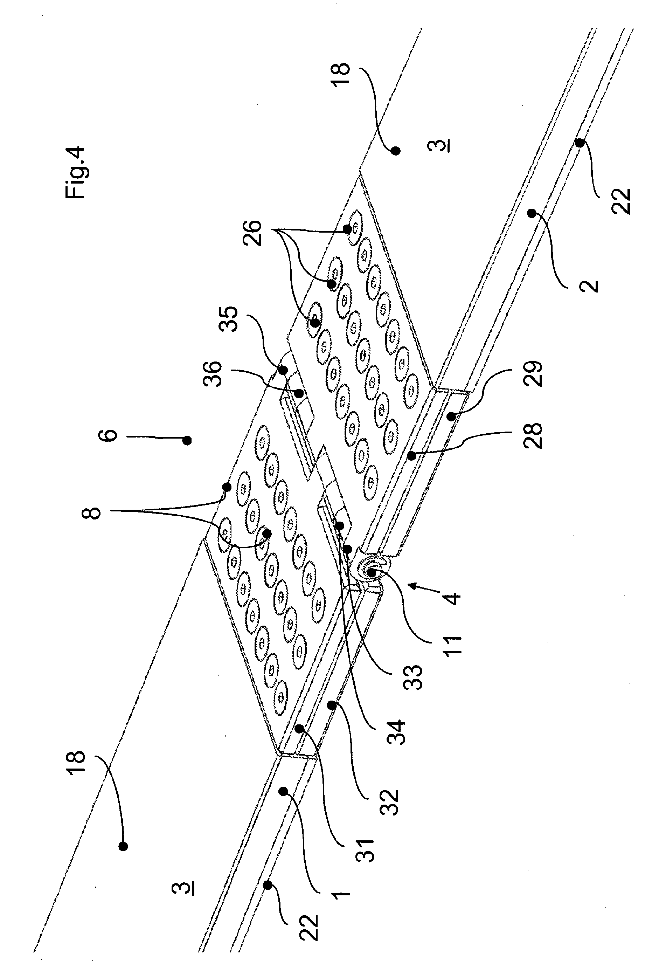

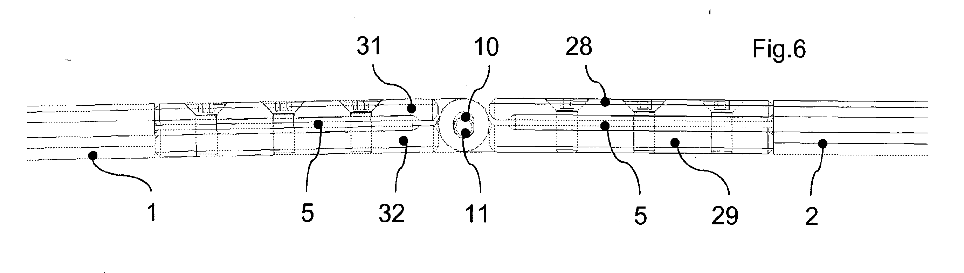

Nachfolgend wird anhand der Fig. 4 bis 6 eine modifizierte Scharnierverbindung zweier Enden eines Fördergurtes oder der Enden zweier Fördergurtsegmente beschrieben.

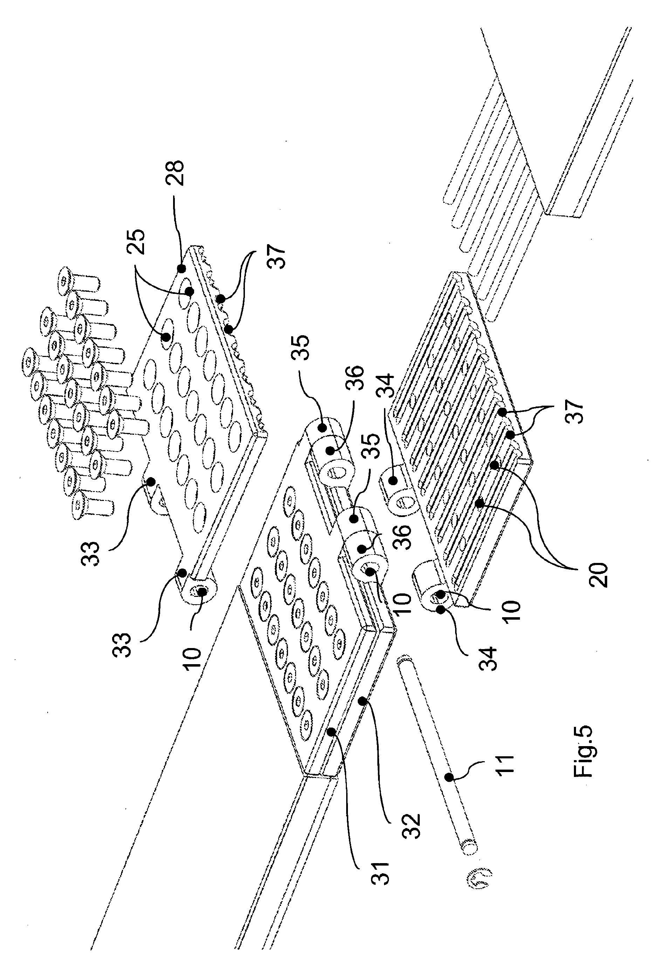

Die Enden 1 und 2 des Stahlseilfördergurtes 3 sind über ein Scharnier 4 miteinander zugfest verbunden (Fig. 4). Der Stahlseilfördergurt 3 ist in an sich bekannter Weise aus elastomerem Werkstoff aufgebaut und weist eine eingebettete Festigkeitsträgerlage aus Stahlkorden bzw. parallel angeordneten Stahlseilen 5 (Fig. 5) auf.

In den Endbereichen der Gurtenden 1 und 2 sind die Gummideckschichten und die Kerngummischicht, in die die Stahlseile 5 eingebettet sind, entfernt. Die Enden der Stahlseile 5 sind somit im Endbereich ausgefingert, d.h. sie liegen frei. Beide Gurt- bzw. Segmentenden 1 und 2 sind im Endbereich bis auf die Stahlseile 5 dickenreduziert.

Die ausgefingerten Enden der Stahlseile 5 des jeweiligen Gurtendes 1 bzw. 2 sind zwischen zwei sich gegenüberliegenden Spannplatten 28 und 29 bzw. 31 und 32 eingespannt. Die zwei sich gegenüberliegenden Spannplatten 28 und 29 bzw. 31 und 32 jedes Gurtendes 1 bzw. 2 bilden jeweils ein Spannplattenpaar 28,29 bzw. 31,32.

Die Höhe der Gummiabtragung bis zu den Stahlseilen 5 entspricht in etwa der Dicke der jeweiligen Spannplatte 28; 29; 31 bzw. 32. Die Spannplatten 28; 29; 31 bzw. 32 sind somit nahezu fluchtend mit Gurtoberseite 18 und Gurtunterseite 22 eingesetzt.

Jede der beiden Spannplatten eines Spannplattenpaares 28,29 bzw. 31,32 weist an ihrem freien Ende zinnenartige Vorsprünge 33,34 bzw. 35,36 mit jeweils einer Querbohrung 10 auf. Die Querbohrungen 10 haben stehende Langlochform und ermöglichen so einen Ausgleich von Dickentoleranzen der Gurtenden. Die zinnenartigen Vorsprünge 33 und 34 der beiden Spannplatten 28 und 29 des einen Spannplattenpaares 28, 29 sind gegeneinander versetzt angeordnet und bilden zusammen ein Teilscharnier 33,34. Die zinnenartigen Vorsprünge 35 und 36 der beiden Spannplatten 31 und 32 des anderen Spannplattenpaares 31, 32 bilden ebenfalls ein Teilscharnier 35, 36 und sind zusammen zu den zinnenartigen Vorsprüngen 33,34 des ersten Spannplattenpaares 28, 29 versetzt angeordnet. Dadurch sind die beiden Teilscharniere 33,34 und 35, 36 zu dem Scharnier 4 zusammenlegbar.

Das Scharnier 4 besteht somit aus den beiden Teilscharnieren 33,34 und 35, 36, deren zinnenartige Vorsprünge 33,34 und 35, 36 derart ineinander greifen, dass die in den Vorsprüngen 33,34 und 35, 36 angeordneten Querbohrungen 10 miteinander fluchten, so dass ein Kupplungsstab 11 durch die Querbohrungen 10 zum Schließen des Scharniers 4 einführbar ist.

Im Nachfolgenden wird nur eine Scharnierseite beschrieben. Diese Ausführungen gelten sinngemäß auch für die andere Scharnierseite. Die Teilscharniere 33,34 und 35, 36 sind baugleich ausgeführt.

Die obere Spannplatte 28 eines Spannplattenpaares 28, 29 weist jeweils drei Reihen von Durchgangsbohrungen 25 quer zur Gurtbreite auf. Die untere Spannplatte 29 des Spannplattenpaares 28, 29 weist jeweils drei Reihen von Gewindebohrungen 20 quer zur Gurtbreite auf, die deckungsgenau unter den Durchgangsbohrungen 25 liegen.

Die beiden Spannplatten 28 und 29 einer Scharnierseite bilden eine Spanneinheit und sind unter Einschluss der Enden der Stahlseile 5 fest miteinander durch Schraubverbindungen 26 zusammengefügt und pressen dabei die zwischen ihnen liegenden Stahlseile 5 ein, die in Längsnuten 37 in der Innenfläche der jeweiligen Spannplatte 28 bzw. 29 liegen. Die Tiefe der Längsnuten 37 ist etwas geringer als der halbe Durchmesser der Stahlseile 5. Dadurch werden die Enden der Stahlseile 5 zwischen den Spannplatten 28 und 29 eingespannt. Die Zugkräfte der Fördergurtenden 1 und 2 werden von den Stahlseilen 5 über die Spannplatten 28 und 29 auf das Scharnier 4 übertragen.

Neben jeder Längsnut 37 ist eine weitere Längsnut in geringem Abstand eng nebenliegend angeordnet. Durch die Einbringung zweier paralleler Längsnuten in geringem Abstand können bei der Montage fertigungstechnisch bedingt variierende Seilabstände oder ein paralleler Versatz ausgeglichen werden

### Bezugszeichenliste

### (Teil der Beschreibung)

- 1: Fördergurtende
- 2: Fördergurtende
- 3: Stahlseilfördergurt
- 4: Scharnier
- 5: Stahlkorde; Stahlseile
- 6: Teilscharnier
- 7: Teilscharnier
- 8: zinnenartige Vorsprünge
- 9: zinnenartige Vorsprünge
- 10: Querbohrungen
- 11: Kupplungsstab
- 12: Scharnierriegel
- 13: Scharnierriegel
- 14: integrierte Spannplatte
- 15: integrierte Spannplatte
- 16: Anschlagstufe
- 17: Anschlagstufe
- 18: Gurtoberseite
- 19: Gummideckschicht, oben
- 20: Gewindebohrungen
- 21: Abtragung
- 22: Gurtunterseite
- 23: Gummideckschicht, unten
- 24: separate Spannplatte
- 25: Durchgangsbohrungen
- 26: Schraubverbindungen
- 27: separate Spannplatte
- 28: Spannplatte
- 29: Spannplatte
- 28, 29: Spannplattenpaar
- 31: Spannplatte
- 32: Spannplatte
- 31, 32: Spannplattenpaar
- 33: zinnenartige Vorsprünge
- 34: zinnenartige Vorsprünge
- 33, 34: Teilscharnier
- 35: zinnenartige Vorsprünge
- 36: zinnenartige Vorsprünge
- 35, 36: Teilscharnier
- 37: Längsnuten

## Patentansprüche

1. Fördergurt oder Fördergurtsegment aus elastomerem Werkstoff mit einer Festigkeitsträgerlage aus in Längsrichtung des Fördergurtes verlaufenden, parallel zueinander angeordneten Stahlseilen, wobei jedes Gurt- bzw. Segmentende eine Ausbildung zum scharnierartigen Zusammenkoppeln mit einem anderen Gurt- bzw. Segmentende aufweist ist, wobei jedes Gurt- bzw. Segmentende (1 bzw. 2) im Endbereich dickenreduziert ist, in dem entweder die beidseitigen Gummideckschichten (23) des Fördergurtes teilweise abgetragen, entfernt oder die Stahlseile (5) von den Gummischichten des Gurtes (3) freigelegt sind, wobei der dickenreduzierte Endbereich des jeweiligen Gurtendes (1 bzw. 2) zwischen zwei in den gegenüberliegenden Gurtaußenflächen (18 und 22) des Fördergurtes (3) eingelassene Spannplatten (14, 24 bzw. 15, 27) eingespannt ist, wobei mindestens eine der beiden sich gegenüberliegenden Spannplatten (14, 24 bzw. 15, 27) ein Teilscharnier (6 bzw. 7) an ihrem freien Ende aus zinnenartigen Vorsprüngen (8; 9) aufweist, das mit einem anderen, an einem anderen Gurtende (1 bzw. 2) angeordneten Teilscharnier (6 bzw. 7) zusammenlegbar ist, und wobei jedes Gurt- bzw. Segmentende (1 bzw. 2) an je einem Teilscharnier (6 bzw. 7) befestigt ist, das mit einem anderen, an einem anderen Gurtende (1 bzw. 2) befestigten Teilscharnier (6 bzw. 7) zusammenlegbar ist, **dadurch gekennzeichnet, dass** jedes Teilscharnier (6 bzw. 7) jeweils einen quer zur Gurtlängsrichtung angeordneten Scharnierriegel (12 bzw. 13) aufweist, wobei jeder Scharnierriegel (12 bzw. 13) an seinem freien Ende die zinnenartige Vorsprünge (8 bzw. 9) aufweist,.

2. Fördergurt nach Anspruch 1, **dadurch gekennzeichnet, dass** an jedem Scharnierriegel (12 bzw. 13) den zinnenartigen Vorsprüngen (8 bzw. 9) gegenüberliegend unter Bildung einer Anschlagstufe (16 bzw. 17) eine integrierte Spannplatte (14 bzw. 15) angeformt ist, wobei die Bodenfläche der integrierten Spannplatte (14 bzw. 15) und die eine Außenoberfläche des Scharnierriegels (12) in einer Ebene verlaufen, dass die integrierte Spannplatte (14 bzw. 15) in der einen Gurtaußenfläche (18) des Fördergurtes durch Reduzierung der Dicke der Gummideckschicht (19) eingelassen ist, dass auf der entgegengesetzten Gurtaußenfläche (22) jeweils eine korrespondierende, separate Spannplatte (24 bzw. 27) in die dortige Gummideckschicht (23) eingelassen ist, die stirnseitig gegen die Anschlagstufe (16 bzw. 17) des Scharnierriegels (12 bzw. 13) anliegt, dass jeweils die beiden Spannplatten (14 und 24 bzw. 15 und 27) das dickenreduzierte Gurtende (1 bzw. 2) zwischen sich einspannend miteinander verbunden sind.

3. Fördergurt oder Fördergurtsegment aus elastomerem Werkstoff mit einer Festigkeitsträgerlage aus in Längsrichtung des Fördergurtes verlaufenden, parallel zueinander angeordneten Stahlseilen, wobei jedes Gurt- bzw. Segmentende eine Ausbildung zum scharnierartigen Zusammenkoppeln mit einem anderen Gurt- bzw. Segmentende aufweist ist, wobei jedes Gurt- bzw. Segmentende (1 bzw. 2) im Endbereich dickenreduziert ist, in dem entweder die beidseitigen Gummideckschichten (23) des Fördergurtes teilweise abgetragen, entfernt oder die Stahlseile (5) von den Gummischichten des Gurtes (3) freigelegt sind, wobei der dickenreduzierte Endbereich des jeweiligen Gurtendes (1 bzw. 2) zwischen zwei in den gegenüberliegenden Gurtaußenflächen (18 und 22) des Fördergurtes (3) eingelassene Spannplatten (28,29 bzw. 31,32) eingespannt ist, wobei die Spannplatten (28,29 bzw. 31,32) ein Teilscharnier (33,34 bzw. 35,36) an ihrem freien Ende aus zinnenartigen Vorsprüngen (33,34 bzw. 35,36) aufweisen, das mit einem anderen, an einem anderen Gurtende (1 bzw. 2) angeordneten Teilscharnier (33,34 bzw. 35,36) zusammenlegbar ist, und wobei jedes Gurt- bzw. Segmentende (1 bzw. 2) an je einem Teilscharnier (6 bzw. 7) befestigt ist, das mit einem anderen, an einem anderen Gurtende (1 bzw. 2) befestigten Teilscharnier (6 bzw. 7) zusammenlegbar ist, **dadurch gekennzeichnet, dass** die sich gegenüberliegenden Spannplatten (28, 29 bzw. 31, 32) beide mit zinnenartigen Vorsprüngen (33, 34 bzw. 35, 36) versehen sind, die jeweils zusammen ein Teilscharnier (33, 34 bzw. 35, 36) bilden.

4. Fördergurt nach Anspruch 1 oder 3, **dadurch gekennzeichnet, dass** die Spannfläche mindestens einer der Spannplatten (14, 15 bzw. 24, 27) mit Querrippen versehen ist.

5. Fördergurt nach Anspruch 3, **dadurch gekennzeichnet, dass** die Innenseiten der Spannplatten mit Längsnuten (37) versehen sind, die in derselben Abstandsteilung wie die Stahlseile (5) zueinander angeordnet sind.

6. Fördergurt nach Anspruch 5, **dadurch gekennzeichnet, dass** neben jeder Längsnut (37) eine weitere Längsnut in geringem Abstand eng nebenliegend angeordnet ist.

## Claims

1. Conveyor belt or conveyor belt segment of elastomeric material, with a reinforcement layer comprising steel cords running in the longitudinal direction of the conveyor belt and arranged parallel to one another, wherein each end of the belt or segment has a formation for coupling together with another end of the belt or segment in the manner of a hinge, wherein each end of the belt or segment (1 or 2) is reduced in thickness in the end region, in that either the outer rubber layers (23) on both sides of the conveyer belt are partially stripped away or removed or the steel cords (5) are exposed by taking away the rubber layers of the belt (3), wherein the end region of reduced thickness of the respective end of the belt (1 or 2) is clamped between two clamping plates (14, 24 or 15, 27) let into the opposite outer belt surfaces (18 and 22) of the conveyor belt (3), wherein at least one of the two opposing clamping plates (14, 24 or 15, 27) has at its free end a part-hinge (6 or 7) comprising crenellated projections (8; 9), which can be assembled with another part-hinge (6 or 7) arranged at another end of the belt (1 or 2), and wherein each end of the belt or segment (1 or 2) is fastened to a respective part-hinge (6 or 7) that can be assembled with another part-hinge (6 or 7) fastened to another end of the belt (1 or 2), **characterized in that** each part-hinge (6 or 7) respectively has a hinge bolt (12 or 13) arranged transversely in relation to the longitudinal direction of the belt, each hinge bolt (12 or 13) having the crenellated projections (8 or 9) at its free end.

2. Conveyor belt according to Claim 1, **characterized in that** an integrated clamping plate (14 or 15) is formed on each hinge bolt (12 or 13), lying opposite the crenellated projections (8 or 9), to form a stop step (16 or 17), wherein the bottom surface of the integrated clamping plate (14 or 15) and the one outer surface of the hinge bolt (12) run in a plane, **in that** the integrated clamping plate (14 or 15) is let into the one outer belt surface (18) of the conveyor belt by reducing the thickness of the outer rubber layer (19), **in that** on the opposing outer belt surface (22) there is respectively a corresponding, separate clamping plate (24 or 27) let into the outer rubber layer (23) there, lying with its end face against the stop step (16 or 17) of the hinge bolt (12 or 13), **in that** in each case the two clamping plates (14 and 24 or 15 and 27) are connected to one another, clamping between them the end of the belt (1 or 2) of reduced thickness.

3. Conveyor belt or conveyor belt segment of elastomeric material, with a reinforcement layer comprising steel cords running in the longitudinal direction of the conveyor belt and arranged parallel to one another, wherein each end of the belt or segment has a formation for coupling together with another end of the belt or segment in the manner of a hinge, wherein each end of the belt or segment (1 or 2) is reduced in thickness in the end region, in that either the outer rubber layers (23) on both sides of the conveyer belt are partially stripped away or removed or the steel cords (5) are exposed by taking away the rubber layers of the belt (3), wherein the end region of reduced thickness of the respective end of the belt (1 or 2) is clamped between two clamping plates (28, 29 or 31, 32) let into the opposite outer belt surfaces (18 and 22) of the conveyor belt (3), wherein the clamping plates (28, 29 or 31, 32) have at their free end a part-hinge (33, 34 or 35, 36) comprising crenellated projections (33, 34 or 35, 36), which can be assembled with another part-hinge (33, 34 or 35, 36) arranged at another end of the belt (1 or 2), and wherein each end of the belt or segment (1 or 2) is fastened to a respective part-hinge (6 or 7), which can be assembled with another part-hinge (6 or 7) fastened to another end of the belt (1 or 2), **characterized in that** the opposing clamping plates (28, 29 or 31, 32) are both provided with crenellated projections (33, 34 or 35, 36), which in each case together form a part-hinge (33, 34 or 35, 36).

4. Conveyor belt according to Claim 1 or 3, **characterized in that** the clamping surface of at least one of the clamping plates (14, 15 or 24, 27) is provided with transverse ribs.

5. Conveyor belt according to Claim 3, **characterized in that** the inner sides of the clamping plates are provided with longitudinal grooves (37), which are arranged at the same spacing from one another as the steel cords (5).

6. Conveyor belt according to Claim 5, **characterized in that**, next to each longitudinal groove (37), a further longitudinal groove is arranged lying closely alongside at a small distance.

## Revendications

1. Bande transporteuse ou segment de bande transporteuse en matériau élastomère, comprenant une nappe de renforcement constituée de câbles d'acier s'étendant dans la direction longitudinale de la bande transporteuse, disposés parallèlement les uns aux autres, chaque extrémité de bande ou de segment présentant une conception pour un accouplement de type charnière à une autre extrémité de bande ou de segment, chaque extrémité de bande ou de segment (1, respectivement 2) ayant une épaisseur réduite dans la région d'extrémité, dans laquelle soit les couches de recouvrement en caoutchouc (23) des deux côtés de la bande transporteuse sont partiellement enlevées ou éliminées, soit les câbles d'acier (5) sont exposés depuis les couches en caoutchouc de la bande (3), la région d'extrémité d'épaisseur réduite de chaque extrémité de bande (1, respectivement 2) étant serrée entre deux plaques de serrage (14, 24, respectivement 15, 27) incorporées dans les faces extérieures opposées de bande (18 et 22) de la bande transporteuse (3), au moins l'une des deux plaques de serrage opposées (14, 24, respectivement 15, 27) présentant une charnière partielle (6, respectivement 7) au niveau de son extrémité libre, laquelle est constituée de saillies de type dents (8 ; 9), peut être assemblée à une autre charnière partielle (6, respectivement 7) disposée à une autre extrémité de bande (1, respectivement 2), et chaque extrémité de bande, respectivement de segment (1, respectivement 2) étant fixée à une charnière partielle respective (6, respectivement 7) qui peut être assemblée à une autre charnière partielle (6, respectivement 7) fixée à une autre extrémité de bande (1, respectivement 2), caractérisé(e) en ce que chaque charnière partielle (6, respectivement 7) présente à chaque fois un verrou de charnière (12, respectivement 13) disposé transversalement à la direction longitudinale de la bande, chaque verrou de charnière (12, respectivement 13) présentant à son extrémité libre les saillies de type dents (8, respectivement 9).

2. Bande transporteuse selon la revendication 1, **caractérisée en ce qu'**une plaque de serrage intégrée (14, respectivement 15) est façonnée au niveau de chaque verrou de charnière (12, respectivement 13) en regard des saillies de type dents (8, respectivement 9) en formant un étage de butée (16, respectivement 17), la face de fond de la plaque de serrage intégrée (14, respectivement 15) et l'une des surfaces extérieures du verrou de charnière (12) s'étendant dans un plan, **en ce que** la plaque de serrage intégrée (14, respectivement 15) est incorporée dans l'une des faces extérieures de bande (18) de la bande transporteuse par réduction de l'épaisseur de la couche de recouvrement en caoutchouc (19), **en ce qu'**une plaque de serrage séparée correspondante (24, respectivement 27) est à chaque fois incorporée dans la couche de recouvrement en caoutchouc (23) se trouvant sur la face extérieure de bande opposée (22), laquelle plaque de serrage s'applique du côté frontal contre l'étage de butée (16, respectivement 17) du verrou de charnière (12, respectivement 13), **en ce qu'**à chaque fois les deux plaques de serrage (14 et 24, respectivement 15 et 27) sont connectées l'une à l'autre en enserrant entre elles l'extrémité de bande d'épaisseur réduite (1, respectivement 2).

3. Bande transporteuse ou segment de bande transporteuse en matériau élastomère, comprenant une nappe de renforcement constituée de câbles d'acier s'étendant dans la direction longitudinale de la bande transporteuse, disposés parallèlement les uns aux autres, chaque extrémité de bande ou de segment présentant une conception pour un accouplement de type charnière à une autre extrémité de bande ou de segment, chaque extrémité de bande ou de segment (1, respectivement 2) ayant une épaisseur réduite dans la région d'extrémité, dans laquelle soit les couches de recouvrement en caoutchouc (23) des deux côtés de la bande transporteuse sont partiellement enlevées ou éliminées, soit les câbles d'acier (5) sont exposés depuis les couches en caoutchouc de la bande (3), la région d'extrémité d'épaisseur réduite de chaque extrémité de bande (1, respectivement 2) étant serrée entre deux plaques de serrage (28, 29, respectivement 31, 32) incorporées dans les faces extérieures opposées de bande (18 et 22) de la bande transporteuse (3), les plaques de serrage (28, 29, respectivement 31, 32) présentant une charnière partielle (33, 34, respectivement 35, 36) à leur extrémité libre, laquelle est constituée de saillies de type dents (33, 34, respectivement 35, 36), peut être assemblée à une autre charnière partielle (33, 34, respectivement 35, 36) disposée à une autre extrémité de bande (1, respectivement 2), et chaque extrémité de bande, respectivement de segment (1, respectivement 2) étant fixée à une charnière partielle respective (6, respectivement 7) qui peut être assemblée à une autre charnière partielle (6, respectivement 7) fixée à une autre extrémité de bande (1, respectivement 2), caractérisé(e) en ce que des plaques de serrage opposées (28, 29, respectivement 31, 32) sont toutes deux pourvues de saillies de type dents (33, 34, respectivement 35, 36), qui forment à chaque fois ensemble une charnière partielle (33, 34, respectivement 35, 36).

4. Bande transporteuse selon la revendication 1 ou 3, **caractérisée en ce que** la face de serrage d'au moins l'une des plaques de serrage (14, 15, respectivement 24, 27) est pourvue de nervures transversales.

5. Bande transporteuse selon la revendication 3, **caractérisée en ce que** les côtés intérieurs des plaques de serrage sont pourvus de rainures longitudinales (37) qui sont disposées les unes par rapport aux autres avec le même espacement que les câbles d'acier (5).

6. Bande transporteuse selon la revendication 5, **caractérisée en ce qu'**en plus de chaque rainure longitudinale (37) est prévue une rainure longitudinale supplémentaire juxtaposée étroitement à faible distance.
